(19) Europäisches Patentamt
European Patent Office
Office européen des brevets

(11) EP 1 637 904 B1

(12) **FASCICULE DE BREVET EUROPEEN**

(45) Date de publication et mention
de la délivrance du brevet:
**09.05.2007 Bulletin 2007/19**

(51) Int Cl.:
**G01V 11/00** *(2006.01)*

(21) Numéro de dépôt: **05291743.2**

(22) Date de dépôt: **17.08.2005**

(54) **Méthode pour génerer un modèle de reservoir sur maillage flexible**

Verfahren zur Erstellung eines Reservoirmodells mit einer flexiblen Gitterweite

Method for generating a reservoir model with flexible mesh

(84) Etats contractants désignés:
**GB**

(30) Priorité: **16.09.2004 FR 0409824**

(43) Date de publication de la demande:
**22.03.2006 Bulletin 2006/12**

(73) Titulaire: **Institut Français du Pétrole**
**92852 Rueil Malmaison Cédex (FR)**

(72) Inventeurs:
• **Ricard, Ludovic**
**92500 Rueil-Malmaison (FR)**
• **Le Ravalec-Dupin, Mickaële**
**92500 Rueil-Malmaison (FR)**

(56) Documents cités:
**US-A1- 2003 028 325**

• **TRAN T T ET AL: "Efficient conditioning of 3D fine-scale reservoir model to multiphase production data using streamline-based coarse-scale inversion and geostatistical downscaling" SPE ANNUAL TECHNICAL CONFERENCE AND EXHIBITION, no. 56518, 3 octobre 1999 (1999-10-03), pages 1-13, XP002186718**
• **DURLOFSKY L ET AL: "Scale up of heterogeneous three dimensional reservoir descriptions" SPE ANNUAL TECHNICAL CONFERENCE AND EXHIBITION, no. 30709, 22 octobre 1995 (1995-10-22), pages 313-326, XP002186719**

EP 1 637 904 B1

## Description

La présente invention concerne une méthode pour générer de façon rapide un modèle géostatistique de réservoir sur maillage flexible, représentatif d'un milieu hétérogène poreux.

En particulier, la méthode selon l'invention s'applique à la construction d'un modèle stochastique numérique servant à représenter la distribution spatiale, dans une zone souterraine, de propriétés pétrophysiques continues ou discrètes, comme la perméabilité, le type de lithologie ou la porosité. Elle vise à donner à l'ingénieur les moyens d'estimer précisément les réserves d'un gisement pétrolier et d'optimiser la récupération de ces réserves en étudiant différents schémas de production.

## État de la technique

L'optimisation de l'exploitation des gisements pétroliers requiert une étude précise du sous-sol. Il convient donc de pouvoir générer un modèle de réservoir compatible, autant que possible, avec l'ensemble des données collectées (diagraphies, données sismiques, données d'affleurement, historiques de production...) et d'estimer, par simulation réservoir, la production de ce réservoir contraint. On espère, dans la mesure où l'on dispose d'un modèle de réservoir compatible avec l'ensemble des données, réduire l'incertitude sur les prédictions de production. Comme les données collectées sont insuffisantes pour construire un modèle de réservoir de façon déterministe, on recourt à des techniques de modélisation stochastique, le plus souvent basée sur des techniques géostatistiques, qui fournissent une famille de modèles stochastiques numériques du réservoir. Préalablement à la simulation de réservoir, on réalise une caractérisation du réservoir en terme de géométrie et de propriétés pétrophysiques sous forme de modèles stochastiques numériques de réservoir. Un modèle numérique consiste en une grille à $N$ dimensions (N>0 et en général égale à deux ou trois) dont chacune des mailles se voit affecter la valeur d'une propriété pétrophysique caractéristique de la zone étudiée. Il peut s'agir par exemple de la porosité ou de la perméabilité distribuée dans un réservoir. On appelle carte d'une propriété pétrophysique, l'ensemble des valeurs de la propriété pétrophysique exprimées en chacune des mailles du maillage. Ainsi, l'échantillonnage d'une carte suit le maillage du modèle numérique. Un modèle numérique de réservoir est l'association d'un maillage et de cartes des propriétés pétrophysiques du réservoir. Dans un contexte stochastique, on parlera plutôt de réalisation d'une propriété pétrophysique et non de carte. Il existe une infinité de réalisations possibles compatible avec une même description géologique du milieu.

Parmi toutes les données nécessaires à la caractérisation d'un réservoir, on peut clairement discerner deux grandes familles : les données dites statiques qui regroupent les données de sismique 3D, d'affleurement, de diagraphies et les données dynamiques comprenant les historiques de production et les données de sismique 4D. Les données dynamiques se distinguent en ce qu'elles varient dans le temps suivant les écoulements de fluide. L'intégration de ces deux familles de données au sein du modèle numérique n'est pas réalisée de la même façon. L'intégration des données statiques s'effectue lors de la génération du modèle géologique tandis que l'intégration des données dynamiques est réalisée via un problème d'inversion et nécessite l'exécution de nombreuses simulations d'écoulement.

Le processus de conditionnement des modèles numériques aux données de production nécessite de très nombreux appels aux simulateurs. Il est donc nécessaire que le modèle numérique comporte peu de mailles en vue d'obtenir des faibles temps de calculs. Cependant, les simulations d'écoulements sur le modèle numérique doivent être très précises aux abords d'objets singuliers tels que des failles, des bancs argileux ou encore des puits par exemple. De ce fait, les maillages doivent être précis dans ces zones.

La méthode permettant de générer un modèle géostatistique numérique représentatif d'un milieu hétérogène poreux, doit donc répondre à plusieurs impératifs :

    1. la méthode doit permettre, si nécessaire, l'intégration de données statiques de puits

    2. la méthode doit permettre, si nécessaire, l'intégration de données dynamiques de production

    3. la méthode doit limiter l'erreur des simulations d'écoulements aux abords des objets singuliers.

### 1. Intégration des données statiques

Il est parfois nécessaire de contraindre les simulations par des données statiques, telles que des puits. Le conditionnement par les données statiques consiste à contraindre la réalisation $Y$ par les valeurs $Vi$ aux points $Pi$. Afin d'estimer localement aux points $Pi$, les paramètres géostatistiques, il existe de nombreuses techniques. On peut citer, par exemple, les méthodes de krigeage tels que le krigeage simple, le krigeage ordinaire ou le krigeage universel.

### 2. Intégration des données dynamiques de production

Pour intégrer les données dynamiques de production dans le modèle, il faut résoudre un problème inverse, et donc, minimiser une fonction coût. Une telle technique est décrite par exemple dans le document suivant :

*Tarantola, A., 1987, "Inverse problem theory - Methods for data fitting and model parameter estimation. ", Elsevier, Amsterdam, 613 p.*

Mais généralement, ces techniques font appel à une fonction objectif définie par un grand nombre de paramètres. Une méthode de paramétrage, en revanche, permet d'intégrer rapidement les données dynamiques en se basant sur une fonction coût décrite par un nombre très faible de paramètres. Il s'agit de la technique des déformations graduelles, décrite, par exemple, dans le brevet FR 2780798 du demandeur.

On rappelle que cette méthode est une technique de paramétrage qui permet de déformer une réalisation à partir d'un nombre réduit de paramètres tout en préservant la structure géostatistique de celle-ci. Ces propriétés font que cette technique de paramétrage est très intéressante pour contraindre un modèle de réservoir par des données dynamiques de production. De fait, elle a été introduite dans le processus de calage d'historique qui vise à construire un modèle de réservoir contraint par les données de production. Avec cette technique de déformation graduelle, il est possible de modifier à la fois globalement et localement les réalisations géostatistiques. Dans le cas de modifications locales, la connaissance du bruit blanc Gaussien sous-jacent est nécessaire.

3. Limitation de l'erreur des simulations d'écoulements aux abords des objets singuliers

Pour limiter l'erreur sur les résultats de simulation d'écoulements due au maillage, l'industrie pétrolière s'est tournée vers l'utilisation de maillage flexible. Un maillage flexible est un maillage contenant des mailles de différentes formes et de différents volumes. Ce type de maillage est décrit par exemple, dans le document suivant :

*Balaven-Clermidy,S., 2001, " Génération de maillages hybrides pour la simulation des réservoirs pétroliers. ", PhD thesis, Ecole des Mines de Paris.*

Ce type de maillage permet d'améliorer la description du modèle numérique en raffinant le modèle d'écoulement dans les zones les plus sensibles à l'écoulement (puits, failles, zones de fortes hétérogénéités...).

La technique des déformations graduelles, globale ou locale, est donc clairement la technique la plus efficace pour intégrer les données dynamiques. D'autre part, pour limiter les pertes d'information lors de la création du maillage utilisée pour les simulations d'écoulements, il est nécessaire de faire appel à des maillages flexibles. Cependant, toutes les méthodes de simulation géostatistique ne sont pas pleinement compatibles avec la méthode de déformation graduelle. Par exemple, les réalisations simulées à partir de la méthode des bandes tournantes ne peuvent pas être soumises à une déformation graduelle locale car les simulateurs géostatistiques de type bandes tournantes ne séparent pas la génération du bruit blanc Gaussien de la structure de covariance. Quant aux méthodes basées sur une décomposition de Cholesky de la matrice de covariance, elles ne sont pas envisageables informatiquement pour un nombre de points supérieur à 1000. Or la taille d'un modèle géostatistique est généralement de l'ordre du million de mailles. Ces méthodes ne sont donc pas envisageables pour une étude de réservoir pétrolier. Les algorithmes de simulation séquentielle s'adaptent à la méthode de déformation graduelle, bien qu'ils nécessitent quelques aménagements relatifs à la définition du chemin pour visiter les points où l'on doit simuler une valeur. Cette technique est décrite par exemple dans le document :

*Hu, L. Y and Blanc G. and Noetinger B., 2001, "Gradual deformation and iterative calibration of sequential stochastic simulations", Math. Geol., 33(4).*

Cependant, l'inconvénient de cette méthode est que les simulations au $N^{ième}$ point implique leur conditionnement par les $N$ -1 valeurs précédemment simulées : l'algorithme peut vite devenir onéreux même si on fait appel à des techniques de voisinage mobile. Un autre inconvénient est qu'elle suppose les mailles de taille sensiblement équivalente.

La méthode FFT-MA s'intègre naturellement dans le cadre de la déformation graduelle. Elle est décrite dans :

*Le Ravalec, M., Noetinger, B., and Hu, L.-Y., 2000, "The FFT-Moving Average (FFT-MA) generator: An efficient tool for generating and conditioning Gaussian simulations", Math. Geol., 32(6), 701-723.*

Cette méthode produit des réalisations qui peuvent être déformées globalement ou localement suivant les principes de déformation graduelle. Cette propriété tient au produit de convolution qui découple les nombres aléatoires (i.e., le bruit blanc Gaussien) des paramètres géostatistiques (i.e., le noyau de la fonction de covariance). On peut alors varier les nombres aléatoires, soit dans leur intégralité, soit par zone et induire des déformations globales, soit locales, tout en conservant le modèle de covariance. Cependant, cette technique ne peut pas être utilisée sur des maillages flexibles par construction. En effet, elle repose sur l'utilisation des transformées de Fourier rapide, outils particulièrement performants dans le cas de maillages cartésiens.

Trau T. T. et al., 1999 " Efficient Conditioning of 3D Fine-Scale Reservoir Model to Multiphase Production Data Using Streamline-Based Coarse-Scale Inversion and Geostatistical Downscaling", SPE, N° 56518, montrent l'utilisation d'un changement de maille régulier au cours de la modélisation.

La méthode selon l'invention permet la génération rapide d'un modèle géostatistique de réservoir sur maillage flexible, qui peut être contraint par les données statiques de puits ainsi que les données dynamiques de production. Elle peut être compatible avec la méthode des déformations graduelles.

**La méthode selon l'invention**

L'invention concerne une méthode pour générer un modèle stochastique numérique, représentant la distribution spatiale d'au moins une propriété pétrophysique caractéristique d'un milieu hétérogène poreux. La méthode comporte les étapes suivantes :

- on discrétise dans l'espace ledit milieu hétérogène à l'aide d'un maillage flexible ;

- on génère un maillage cartésien régulier, dont la taille des mailles dans une direction donnée, est supérieure ou égale à la plus grande taille de la maille dudit maillage flexible dans la même direction ;

- on simule, à l'aide d'un simulateur géostatistique, au moins une réalisation de ladite propriété pétrophysique sur ledit maillage cartésien régulier, à partir d'au moins un nombre aléatoire ;

- on re-échantillonne ladite réalisation à un pas de taille inférieure ou égale à la plus petite taille de mailles dudit maillage flexible ;

- on construit une réalisation géostatistique d'un modèle de réservoir sur ledit maillage flexible, par attribution, au centre des mailles du maillage flexible, des valeurs de ladite réalisation re-échantillonnée les plus proches de ce centre.
  Selon l'invention, le simulateur géostatistique peut être choisi parmi les simulateurs compatibles avec la technique des déformations graduelles. On peut par exemple choisir un simulateur géostatistique basé sur la méthode FFT-MA.
  Selon l'invention, on peut utiliser, pour diminuer le temps de calcul, le domaine spectral lors de l'étape de re-échantillonnage de ladite réalisation.
  Enfin, ledit nombre aléatoire peut être issu d'une reconstruction d'une réalisation, continue ou discrète, issue d'une fonction aléatoire représentant un modèle numérique, en utilisant, par exemple, une méthode telle que celle décrite dans la demande de brevet FR04/04.492 du demandeur.
  D'autres caractéristiques et avantages de la méthode selon l'invention, apparaîtront à la lecture de la description ci-après d'exemples non limitatifs de réalisations, en se référant aux figures annexées et décrites ci-après.

## Présentation succincte des figures

- la figure 1 illustre un maillage flexible bidimensionnel ;

- la figure 2 montre une réalisation issue d'une simulation géostatistique sur un maillage cartésien régulier ;

- la figure 3 illustre une réalisation re-échantillonnée sur un maillage plus fin ;

- la figure 4 montre une réalisation continue sur le maillage flexible de la figure 1, obtenue par la méthode selon l'invention ;

- la figure 5 montre une réalisation en faciès sur le maillage flexible de la figure 1, obtenue par la méthode selon l'invention ;

- les figures 6A à 6F illustrent l'application de déformations graduelles locales à une réalisation continue sur maillage flexible obtenue par la méthode selon l'invention.

## Description détaillée de la méthode

La méthode selon l'invention permet la génération d'un modèle géostatistique de réservoir sur maillage flexible, qui peut être contraint par les données statiques de puits ainsi que les données dynamiques de production et elle peut être compatible avec la méthode des déformations graduelles.

La méthode de simulation géostatistique sur maillage flexible peut se décomposer en cinq étapes principales :

1. On génère un maillage flexible;

2. On génère un maillage cartésien régulier, dont la taille des mailles dans une direction donnée, est supérieure ou égale à la plus grande taille de la maille du maillage flexible dans la même direction ;

3. Sur ce maillage cartésien, on simule au moins une réalisation de propriétés pétrophysiques caractéristiques du milieu hétérogène, et que l'on souhaite générer dans le modèle géostatistique sur maillage flexible, à partir d'un simulateur géostatistique s'appuyant sur au moins un nombre aléatoire ;

4. On re-échantillonne cette réalisation avec un pas de discrétisation plus petit, dans le but de connaître la valeur pétrophysique associée à la réalisation en tout point du milieu ;

5. On attribue les valeurs des propriétés pétrophysiques simulées, au centre des mailles du maillage flexible ;

Ces cinq étapes sont décrites en détails ci-après.

Génération d'un maillage flexible.

La génération d'un maillage flexible est une opération bien connue de l'homme du métier. Un tel maillage est décrit par exemple dans le document de S. Balaven-Clermidy (2001) précédemment cité.

On peut, par exemple, générer un maillage radial autour de puits verticaux, un maillage fin orthogonal autour de puits horizontaux et un maillage cartésien régulier loin des puits.

Dans le cadre de la méthode selon l'invention, ce maillage peut également être fourni comme données de départ.

Génération d'un maillage cartésien régulier.

Dans cette étape, on génère un maillage cartésien régulier, dont la taille des mailles dans une direction donnée, est supérieure ou égale à la plus grande taille de maille du maillage flexible dans la même direction. La génération d'un maillage cartésien régulier est une opération classique pour l'homme du métier. Il s'agit de discrétiser le milieu en mailles régulières parallélépipédiques. Un tel maillage est également décrit par exemple dans le document de S. Balaven-Clermidy (2001) précédemment cité.

Dans le cadre de la méthode selon l'invention, ce maillage peut également être fourni comme données de départ.

Simulation géostatistique sur le maillage cartésien régulier.

Dans cette étape, on simule sur le maillage cartésien régulier une réalisation d'au moins une grandeur pétrophysique (la perméabilité par exemple), caractéristique du milieu hétérogène, à partir d'un simulateur géostatistique. De nombreux simulateurs géostatistiques sont connus par l'homme du métier pour simuler des réalisations de grandeurs pétrophysiques et tous peuvent être utilisés dans le cadre de la méthode. On peut citer, par exemple, les techniques déjà citées dans l'état de la technique : la méthode de décomposition de Cholesky, les méthodes de simulations séquentielles, la méthode des bandes tournantes et la méthode FFT-MA. Tous ces simulateurs sont basés sur au moins un nombre aléatoire : germe, bruit blanc gaussien,...

*Intégration des données statiques*

Il est parfois nécessaire de contraindre les simulations par des données statiques, telles que des puits. Le conditionnement par les données statiques consiste à contraindre la réalisation $Y$ par les valeurs $Vi$ aux points $Pi$. Afin d'estimer localement aux points $Pi$, les paramètres géostatistiques, il existe de nombreuses techniques. On peut utiliser, par exemple, la technique du krigeage conditionnel dite encore du double krigeage (Matheron, 1967). Elle nécessite une interpolation de type krigeage simple des données $Vi$ sur l'ensemble du milieu. On note $Ydk$ cette interpolation. On réalise ensuite une évaluation de la simulation géostatistique $Y$ aux points de conditionnement $Pi$ et on note $\tilde{V}i = Y(Pi)$. On effectue ensuite une interpolation de type krigeage simple à partir de ces valeurs $\tilde{V}i$ et on note $Yk$ cette interpolation.

La simulation géostatistique conditionnée s'obtient par combinaisons linéaires de ces interpolations $Ydk$ et $Yk$ et de la réalisation $Y$ :

$$Yc = Ydk + \left(Y - Yk\right)$$

*Intégration des données dynamiques de production*

Les techniques de simulation précédemment citées peuvent être utilisée dans le cadre de la méthode selon l'invention pour intégrer des données dynamiques de production. Cependant, pour générer des modèles géostatistiques compatibles avec la technique des déformations graduelles, il n'existe actuellement que deux familles de méthodes : la méthode FFT-MA et les méthodes de simulations séquentielles. A la différence des méthodes de simulations séquentielles, la méthode FFT-MA n'est pas applicable sur des maillages flexibles. Cela est dû à l'utilisation des transformées de Fourier rapide. Il existe donc à l'heure actuelle une méthode de simulation géostatistique sur maillage flexible compatible avec l'intégration des données dynamiques de production par la technique de paramétrage des déformations graduelles. Néanmoins, cette méthode ayant recours à un estimateur de type krigeage devient relativement coûteuse en temps de calculs pour des milieux relativement grands. Un autre inconvénient est qu'elle suppose les mailles de taille sensiblement équivalente.

La méthode FFT-MA est donc utilisée dans la méthode selon l'invention, dans le cas où la compatibilité avec la technique de paramétrage des déformations graduelles est recherchée. En effet, cette méthode est rapide car elle bénéficie de l'utilisation de transformées de Fourier rapides. En outre, cette méthode s'intègre naturellement dans un processus d'optimisation et elle est totalement compatible avec la méthode de déformation graduelle. Cette dernière propriété est liée au fait que pour la méthode FFT-MA, le bruit blanc Gaussien est généré dans le domaine réel et non dans le domaine spectral. On affecte ainsi à chaque maille du réservoir une composante du bruit blanc Gaussien. L'utilisation du simulateur FFT-MA dans le processus de génération de modèle de réservoir sur maillage flexible, permet donc de pouvoir appliquer la technique de déformation graduelle globale et locale. Ainsi, cette méthode est compatible avec les conditionnements par les données statiques de puits et par les données dynamiques de production.

La méthode FFT-MA repose sur une méthode de moyenne mobile couplée avec un traitement de l'opérateur de convolution dans le domaine spectral.

La méthode de moyenne mobile suppose que l'on travaille avec la fonction de covariance plutôt que la matrice de covariance. Cette fonction de covariance $C$ est décomposable en un produit de convolution de deux fonctions g et *g*, avec *g* transposée de g (*g*(*x*) = *g*(-*x*)) :

$$C = g * \widetilde{g}$$

On génère un champ multi-Gaussien *y* de moyenne *m* et de fonction de covariance *C* à partir de la relation :

$$y = m + g * z$$

où z est un bruit blanc Gaussien

Cette étape permet donc d'obtenir une première réalisation d'un modèle de réservoir sur un maillage cartésien régulier à partir d'un simulateur géostatistique (FFT-MA par exemple). Cette réalisation fournit une réalisation, représentative des valeurs d'une variable pétrophysique, échantillonné au pas régulier du maillage.

Selon la méthode, tout simulateur géostatistique peut être utilisé pour réaliser une simulation géostatistique sur le maillage cartésien régulier. Cependant, dans un mode particulier de réalisation de l'invention, lorsque l'on recherche une compatibilité avec la technique de paramétrage des déformations graduelles, dans le but d'intégrer efficacement les données dynamiques de production, le simulateur FFT-MA est utilisé.

Dans le cadre de la méthode selon l'invention, cette simulation peut également être fournie comme données de départ. Si une compatibilité avec la technique de paramétrage des déformations graduelles est nécessaire on peut alors, par exemple, déterminer le bruit blanc de la simulation et effectuer une nouvelle réalisation à l'aide du simulateur FFT-MA, tel que décrit dans la demande de brevet du demandeur FR04/04.492.

Principe de la reconstruction

La méthode selon l'invention repose sur la reconstruction d'une réalisation déjà échantillonnée sur un maillage cartésien régulier. Par reconstruction, on entend le re-échantillonnage de cette réalisation sur un maillage cartésien régulier de pas de discrétisation plus petit que le précédent. Ce re-échantillonnage permet d'adapter une réalisation discrétisée sur un premier maillage cartésien régulier à pas constant *DX* (vecteur à trois composantes correspondant aux pas de discrétisation selon les trois directions de l'espace), à un maillage cartésien à pas constant *dx* (vecteur à trois composantes correspondant aux pas de discrétisation selon les trois directions de l'espace), qui peut être inférieure au pas du premier maillage. Cette technique est basée sur un théorème issu du traitement de signal et permet, à partir d'une réalisation existante sur maillage cartésien à pas constant, de connaître la valeur de la propriété pétrophysique, associée à cette réalisation, en tout point du milieu. En effet, lors de cette étape, on re-échantillonne la réalisation avec un autre pas de discrétisation, et en faisant tendre ce pas vers zéro, on peut connaître la valeur de la propriété pétrophysique en tout point.

L'utilisation du domaine spectral, lors de cette étape de re-échantillonnage de la réalisation, permet de diminuer le temps de calcul. Cette étape est une opération bien connue de l'homme du métier. Une telle méthode est décrite par exemple dans l'ouvrage suivant :

*Mari J.L., Glangeaud F. et Coppens, 1997, "Traitement du signal pour géologues et géophysiciens ", Editions Technip, Paris.*

Dans le cas particulier où l'on considère une réalisation unidimensionnelle de *N* valeurs disposées sur un maillage cartésien régulier de pas *DX* et que l'on souhaite re-échantillonner sur un maillage comportant $M \times N$ mailles disposées sur un maillage cartésien régulier de pas *dx,* la procédure à suivre se décompose de la façon suivante :

- on calcule le spectre de Fourier de la réalisation originelle *y*[*i*] à *N* fréquences. On obtient deux vecteurs de dimension N (un pour la partie réelle de la transformée de Fourier, l'autre pour la partie imaginaire).

- on sépare, dans ce spectre, les fréquences positives des fréquences négatives pour chacun de ces deux vecteurs. Il y a, par définition d'une transformée de Fourier, *N/2* fréquences positives et *N/2* fréquences négatives.

- pour chaque vecteur, on rajoute autant de fréquences d'amplitude nulle qu'il manque de composantes du spectre pour avoir un vecteur de $M \times N$ composantes. Donc on rajoute $(M-1) \times {}^{N}\!/_{2}$ composantes à la partie des fréquences positives et on rajoute $(M-1) \times {}^{N}\!/_{2}$ composantes à la partie des fréquences positives.

- on calcule la transformée de Fourier inverse de ce vecteur. On a maintenant un vecteur avec $M \times N$ composantes. Il s'agit de la réalisation reconstruite ($\widetilde{y}$[*i*]) avec un pas $dx = {}^{DX}\!/_{M}$

Attribution des valeurs au centre des mailles flexibles

Il s'agit maintenant de calculer, pour chaque maille du maillage flexible, les coordonnées de son centre. On calcule ensuite les coordonnées du point de la réalisation reconstruite le plus proche de ce même centre. Enfin, on attribue la valeur de la réalisation reconstruite disponible à ces coordonnées au centre de la maille du maillage flexible. Cette méthode est indépendante de la façon dont est généré le maillage flexible et de sa forme. De plus, elle permet de générer aussi bien des réalisations continues que des réalisations en faciès via la méthode des Gaussiennes tronquées.

**Exemples d'application**

Application à une réalisation continue

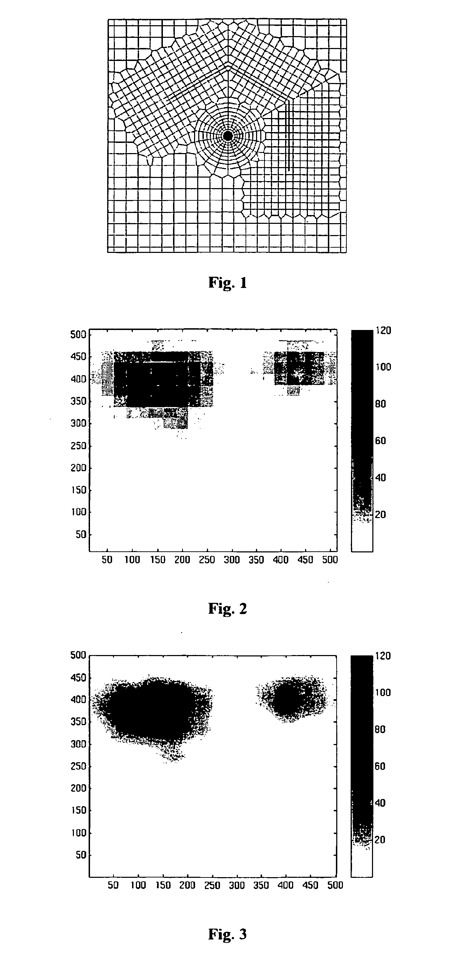

On souhaite générer un modèle de réservoir en deux dimensions, en simulant un champ de perméabilité à partir de puits. Pour obtenir une meilleure résolution, on génère, dans un premier temps, un maillage flexible pour discrétiser le milieu à modéliser (le réservoir). Pour mieux prendre en compte un puits vertical au centre d'une réalisation et trois puits horizontaux entourant ce puits vertical (ces puits sont schématisés par un trait gras sur la figure 1), on génère un maillage radial autour du puits vertical et un maillage fin orthogonal autour des puits horizontaux. Enfin, un maillage cartésien régulier est généré loin des puits. Le maillage ainsi généré possède 929 mailles.

On souhaite donc réaliser une simulation géostatistique sur ce maillage flexible (illustré figure 1), par la méthode selon l'invention.

On réalise donc, dans un second temps, une simulation géostatistique sur un maillage cartésien régulier (figure 2) sur une grille 20x20 soit 400 mailles. La taille de la maille cartésienne correspond à la taille de la maille flexible la plus grosse et la plus fréquente. Cette simulation est réalisée grâce au simulateur FFT-MA. Les données variographiques et la distribution de la variable pétrophysique simulée (la perméabilité) ont les caractéristiques suivantes dans la réalisation présentée figure 2:

- Variogramme : gaussien isotrope

- Longueur de corrélation : 1/5 de la taille du milieu, soit 4 mailles pour la réalisation cartésienne.

- Moyenne du champ $ln(K)$: 1,5

- Variance du champ $ln(K)$: 1

Ensuite, on re-échantillonne la réalisation en choisissant la valeur du pas de la réalisation reconstruite : ici, on choisit un pas de reconstruction 10 fois plus petit que le pas initial. La réalisation reconstruite est présentée sur la figure 3.

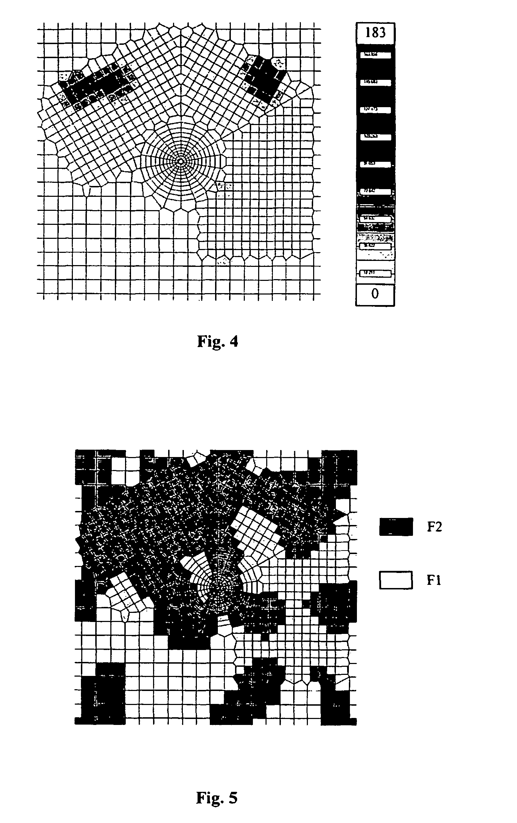

Enfin, on fait correspondre la réalisation reconstruite avec le maillage flexible. On dispose, au final, d'une réalisation géostatistique sur maillage flexible, comme l'illustre la figure 4.

Application à une réalisation en faciès

Les méthodes de simulation produisent à partir d'un germe ou, de façon équivalente, d'un bruit blanc Gaussien, des réalisations. On distingue deux types de réalisations : les réalisations continues et les réalisations discrètes. Typiquement, une réalisation continue peut décrire la répartition spatiale d'un attribut comme la perméabilité. Les valeurs de perméabilité évoluent continûment d'un point à l'autre de l'espace. Parallèlement, une réalisation discrète peut décrire la répartition spatiale de faciès. Les différents faciès sont identifiés par un indicateur : par exemple, 1 pour le faciès réservoir (F1) et 2 pour le faciès non-réservoir (F2). Quand on passe du faciès réservoir au faciès non-réservoir, on a une discontinuité : on passe de 1 à 2.

Pour générer une réalisation en faciès, on utilise la méthode par exemple la méthode des Gaussiennes tronquées, décrite par exemple dans le document suivant :

*Matheron, G., 1967, "Éléments pour une théorie des milieux poreux", Masson, Paris.*

On génère tout d'abord une réalisation normale standard respectant un modèle de covariance fixé. La méthode de re-échantillonnage de l'invention est alors appliquée. C'est seulement après cette étape que l'on applique la méthode des Gaussiennes tronquées pour construire la réalisation en faciès sur le maillage flexible (figure 1). La réalisation finale est montrée sur la figure 5.

Applications des déformations graduelles aux maillages flexibles

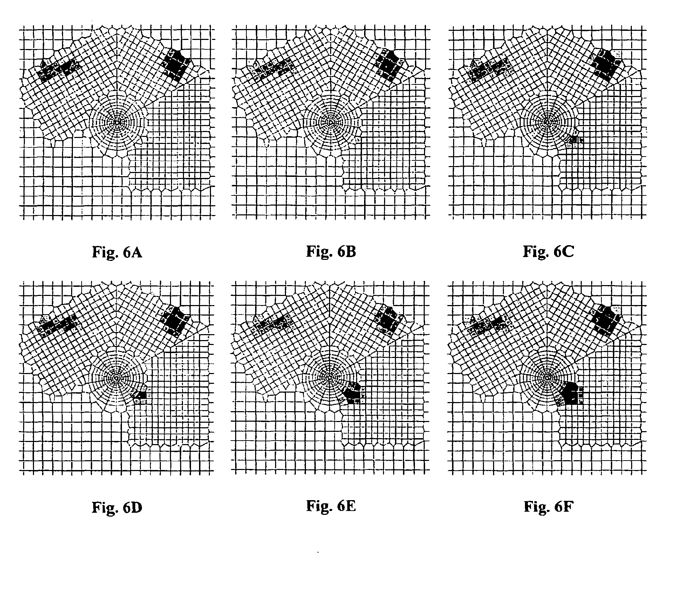

L'intérêt de cette méthode de simulation géostatistique sur maillage flexible est de pouvoir être compatible avec un paramétrage par la méthode des déformations graduelles. Cette propriété est illustrée dans l'exemple suivant, tant pour les déformations graduelles globales que pour les déformations locales. Tout d'abord, on rappelle que la méthode selon l'invention peut s'appuyer sur le simulateur géostatistique FFT-MA qui est lui-même compatible avec les déformations graduelles. La méthode des déformations graduelles est utilisée avec les bruits blancs des simulations géostatistiques ce qui permet de produire des déformations globales et locales. L'implantation de la méthode de déformation graduelle s'effectue donc en amont de l'algorithme de simulation géostatistique. Des exemples de déformation sont présentés sur les figures 6A à 6F. On vérifie la continuité du processus de déformation locale.

**Revendications**

1. Méthode pour générer un modèle stochastique numérique, représentant la distribution spatiale d'au moins une propriété pétrophysique caractéristique d'un milieu hétérogène poreux, **caractérisée en ce que** la méthode comporte les étapes suivantes :

    - on discrétise dans l'espace ledit milieu hétérogène à l'aide d'un maillage flexible ;
    - on génère un maillage cartésien régulier dont la taille des mailles, dans une direction donnée, est supérieure ou égale à la plus grande taille de la maille dudit maillage flexible dans la même direction ;

- on simule, à l'aide d'un simulateur géostatistique au moins une réalisation de ladite propriété pétrophysique sur ledit maillage cartésien régulier, à partir d'au moins un nombre aléatoire ;
- on re-échantillonne ladite réalisation à un pas de taille inférieure ou égale à la plus petite taille de mailles dudit maillage flexible ;
- on construit une réalisation géostatistique d'un modèle de réservoir sur ledit maillage flexible, par attribution, au centre des mailles du maillage flexible, des valeurs de ladite réalisation re-échantillonnée les plus proches de ce centre.

2. Méthode selon la revendication 1, dans laquelle ledit simulateur géostatistique est compatible avec la technique des déformations graduelles.

3. Méthode selon l'une des revendications précédentes, dans laquelle ledit simulateur géostatistique est basé sur la méthode FFT-MA.

4. Méthode selon la revendication 1, dans laquelle on utilise le domaine spectral lors de l'étape de re-échantillonnage de ladite réalisation.

5. Méthode selon l'une des revendications précédentes, dans laquelle ledit nombre aléatoire est issu d'une reconstruction d'une réalisation, continue ou discrète, issue d'une fonction aléatoire représentant un modèle numérique.

**Claims**

1. A method for generating a digital stochastic model, representing the spatial distribution of at least one petrophysical property which is characteristic of a porous heterogeneous environment, **characterised in that** the method comprises the following steps:

    - said heterogeneous environment is discretised in space using a flexible grid;
    - a regular Cartesian grid is generated, of which the size of the grid cells, in a given direction, is greater than or equal to the largest size of the grid cell of said flexible grid in the same direction;
    - using a geostatic simulator, at least one realisation of said petrophysical property is simulated on said regular Cartesian grid, from at least one random number;
    - said realisation is resampled at a size level which is less than or equal to the smallest size of grid cells of said flexible grid;
    - a geostatic realisation of a reservoir model is constructed on said flexible grid, by attributing, in the centre of the grid cells of the flexible grid, values of said resampled realisation which are closest to this centre.

2. The method according to Claim 1, in which said geostatic simulator is compatible with the gradual deformation technique.

3. The method according to one of the preceding claims, in which said geostatic simulator is based on the FFT-MA method.

4. The method according to Claim 1, in which the spectral domain is used during the resampling step of said realisation.

5. The method according to one of the preceding claims, in which said random number comes from a reconstruction of a realisation, which is continuous or discrete, coming from a random function representing a digital model.

**Patentansprüche**

1. Methode zur Erzeugung eines digitalen stochastischen Modells, das die Raumverteilung von mindestens einer petrophysikalischen Eigenschaft, die für ein poröses heterogenes Medium charakteristisch ist, darstellt, **dadurch gekennzeichnet, dass** die Methode die folgenden Schritte umfasst:

    - Diskretisieren des heterogenen Mediums im Raum mit Hilfe eines flexiblen Maschennetzes;
    - Erzeugen eines regelmäßigen kartesischen Maschennetzes, dessen Maschengröße in eine gegebene. Richtung größer oder gleich der größten Größe der Masche des flexiblen Maschennetzes in derselben Richtung ist;
    - mit Hilfe eines geostatistischen Simulators Simulieren von mindestens einer Ausführung der petrophysikalischen Eigenschaft auf dem regelmä-ßigen kartesischen Maschennetz aus mindestens einer zufälligen Anzahl;
    - Wiederbemustern der Ausführung in einem Maschenabstand kleiner oder gleich der kleinsten Maschengröße des flexiblen Maschennetzes;
    - Bauen einer geostatistischen Ausführung eines Modells eines Behälters auf dem flexiblen Maschennetz durch Zuteilung im Zentrum der Maschen des flexiblen Maschennetzes der Werte der wieder bemusterten Ausführung, die diesem Zentrum am nächsten sind.

2. Methode nach Anspruch 1, bei der der geostatistische Simulator mit der Technik der graduellen Verformungen kompatibel ist.

3. Methode nach einem der vorhergehenden Ansprüche, bei der der geostatistische Simulator auf der Methode FFT-MA basiert.

**4.** Methode nach Anspruch 1, bei der der Spektralbereich beim Schritt der Wiederbemusterung der Ausführung verwendet wird.

**5.** Methode nach einem der vorhergehenden Ansprüche, bei der die zufällige Anzahl von einer Rekonstruktion einer kontinuierlichen oder diskreten Ausführung stammt, die von einer zufälligen Funktion stammt, die ein digitales Modell darstellt.

Fig. 1

Fig. 2

Fig. 3

**Fig. 4**

F2

F1

**Fig. 5**

Fig. 6A

Fig. 6B

Fig. 6C

Fig. 6D

Fig. 6E

Fig. 6F